# EUROPÄISCHE PATENTSCHRIFT

(11) **EP 1 352 232 B1**
(45) Veröffentlichungstag und Bekanntmachung des Hinweises auf die Patenterteilung: **22.09.2004**
(21) Anmeldenummer: 01989406.2
(22) Anmeldetag: 12.12.2001
(51) Int. Cl.: G01N 21/88, G06T 7/00, G01N 21/57

(54) **VERFAHREN ZUR FESTSTELLUNG UND BEWERTUNG VON DEFEKTEN EINER PROBENOBERFLÄCHE**
METHOD FOR DETERMINING AND EVALUATING DEFECTS IN A SAMPLE SURFACE
PROCEDE POUR DETECTER ET EVALUER DES DEFAUTS SUR LA SURFACE D'UN ECHANTILLON

(30) Priorität: 19.01.2001 DE 10102387
(43) Veröffentlichungstag der Anmeldung: 15.10.2003
(73) Patentinhaber: Atlas Material Testing Technology GmbH, 63589 Linsengericht/Altenhasslau (DE)
(72) Erfinder: BERNATEK, Christian, 63110 Rodgau (DE); KELLNER, Frank, 36251 Bad Hersfeld (DE); MARCH, Peter, 60326 Frankfurt a. M. (DE)
(74) Vertreter: Graf Lambsdorff, Matthias, Dr.
(86) Internationale Anmeldenummer: PCT/DE2001/004715
(87) Internationale Veröffentlichungsnummer: WO 2002/057761

(56) Entgegenhaltungen:
- DE-C- 4 139 107
- US-A- 5 831 725
- US-A- 6 148 097

## Beschreibung

Die Erfindung betrifft ein optisches Bilderkennungsverfahren zur Feststellung und Bewertung von Defekten einer Probenoberfläche wie beispielsweise der Lackoberfläche eines Kraftfahrzeugs. Dabei bezieht sich die Erfindung auf ein Verfahren, bei welchem die zu untersuchende Probenoberfläche nacheinander mit zwei verschiedenen Lichtarten beleuchtet und ausgewertet wird.

Ein wichtiges Einsatzgebiet von optischen Bilderkennungsverfahren ist die Untersuchung von Oberflächen wie Lackoberflächen von Kraftfahrzeugen, die beispielsweise natürlicher oder künstlicher Bewitterung ausgesetzt waren, und die Detektion und Auswertung der durch die Bewitterung in der Oberfläche hervorgerufenen Defekte.

Bei der Qualitätsprüfung dieser Lackschichten werden diese insbesondere auch auf die Haftfestigkeit gegenüber Steinschlag untersucht. Dazu werden in der Automobilindustrie üblicherweise plane Probenbleche mit Musterlackierungen versehen und mit Stein- oder Metallschrot beschossen. Die dadurch in den Musterlackierungen entstandenen Schäden werden ausgewertet und klassifiziert. Dieses Verfahren ist ein wesentlicher Bestandteil der Qualitätscharakterisierung von Lackschichten.

Fahrzeuglackierungen sind im oftmals so aufgebaut, daß auf der metallischen Karosserie nacheinander eine KTL-Schicht, eine Fillerschicht, die eigentliche Farblackschicht und schließlich eine transparente Klarlackschicht aufgebracht sind. Durch die beschriebenen äußeren Einwirkungen können in diesem Schichtaufbau Defekte verschiedener Art wie Kratzer, Löcher oder Verformungen hervorgerufen werden. Diejenigen Defekte, die mit Materialabtrag verbunden sind, unterscheiden sich insbesondere in ihrer Tiefenreichweite voneinander, wobei der Abbruch sowohl an Grenzflächen zwischen benachbarten Schichten als auch innerhalb einzelner Schichten stattfinden kann. Um Informationen über die Haltbarkeit der für den Schichtaufbau verwendeten Materialien oder über die Adhäsion zwischen den Schichten zu gewinnen, ist es von Bedeutung, die Mikrostruktur der Defekte und die relative Häufigkeit verschiedener struktureller Defektmerkmale zu ermitteln.

Zu diesem Zweck wurden verschiedene optische Bilderkennungsverfahren entwickelt, denen gemeinsam ist, daß sich die Oberfläche des zu untersuchenden Materialstücks unter reproduzierbaren Bedingungen beleuchtet und das von der Oberfläche zurückgeworfene Licht einer Bildverarbeitungseinrichtung zugeführt und somit ein Bild der Lackschäden erstellt wird.

Aus der deutschen Patentschrift DE 41 39 107 Cl ist ein Verfahren zum Feststellen und Auswerten von Oberflächenveränderungen an Probestücken bekannt, die natürlicher oder künstlicher Bewitterung ausgesetzt wurden. Mit einer Beleuchtungseinrichtung und einer elektronischen Kamera mit ortsauflösendem Detektor werden Bilder der Probenoberfläche aufgenommen, digitalisiert, in einem Rechner gespeichert und mittels des Rechners werden Graustufenhistogramme der Bilder hergestellt. Die Oberflächenveränderungen können dann durch Differenzbildung zwischen den Graustufenhistogrammen eines unbewitterten Probestückes oder eines genormten Referenzfeldes und des bewitterten Probestückes ermittelt werden. Mit diesem Verfahren ist es jedoch noch nicht möglich, die in verschiedene Tiefen eines Lackaufbaus reichenden Defekte zu erkennen und voneinander zu unterscheiden.

In der WO 98/16815 ist eine Einrichtung zur Untersuchung von Oberflächendefekten beschrieben, welche eine erste Lichtquelle aufweist, durch welche in einem ersten Detektionsschritt kollimiertes Licht mittels geeigneter optischer Elemente erzeugt und auf eine zu untersuchende Probenoberfläche gerichtet werden kann. Von der Probenoberfläche wird das Licht zurückgeworfen und auf einen ortsauflösenden Detektor wie einen CCD-Detektor einer Bildverarbeitungseinrichtung gerichtet, in der aufgenommene Bilder abgespeichert werden können. Ferner ist eine zweite Lichtquelle vorhanden, durch welche mit einer geeigneten optischen Einrichtung diffuses Licht erzeugt und in einem zweiten Detektionsschritt auf die Probenoberfläche gerichtet werden kann. Das von der Probenoberfläche zurückgeworfene Licht wird ebenfalls in die Bildverarbeitungseinrichtung geleitet, in der entsprechende Bilder abgespeichert werden können. Die Verwendung dieser zwei Lichtarten und der Vergleich der mit ihnen durchgeführten Detektionsschritte erlaubt eine Charakterisierung der festgestellten Defekte. Beispielsweise ermöglicht dieses Verfahren die Detektion und Identifikation von Defekten, die in der äußeren transparenten Lackschicht (Klarlack) von Fahrzeuglackierungen vorhanden sind, als auch von Defekten, die in der unter dem Klarlack angeordneten Lackschicht vorhanden sind. Die WO 98/16815, insbesondere die in der Fig.1 in Verbindung mit dem zugehörigen Beschreibungstext beschriebene Einrichtung zur Erzeugung der zwei Lichtarten des kollimierten und des diffusen Lichts wird hiermit in den Offenbarungsgehalt der vorliegenden Anmeldung einbezogen.

Insbesondere ist in der genannten Druckschrift nicht beschrieben, welche Maßnahmen bei der Ausleuchtung des Probens'tücks, der Bildaufnahme und der Auswertung der gewonnenen Bilddaten im Einzelnen vorgenommen werden müssen, damit eine Aufnahme mit optimalem Kontrast erstellt werden kann. In diesem Zusammenhang ist nämlich entscheidend, daß zum einen transparente Lackschichten Verwendung finden und zum anderen der Farbunterschied der anderen Lackschichten sehr klein sein kann, so daß eine Erkennung erheblich erschwert wird.

Bisher ist jedoch nichts darüber bekannt geworden, wie das Potential des in der WO 98/16815 beschriebenen Verfahrens voll ausgeschöpft werden kann.

Der Erfindung liegt somit die Aufgabe zugrunde, ein Verfahren zur Erkennung und Bewertung von Defekten einer Probenoberfläche anzugeben, durch welches Defekte zielsicherer und mit größerer Genauigkeit erkannt und zugeordnet werden können. Insbesondere soll ein derartiges Verfahren Aussagen über die Struktur und Tiefenausdehnung von Defekten möglich machen.

Diese Aufgabe wird durch die Merkmale des Patentanspruchs 1 gelöst. Vorteilhafte Weiterbildungen sind in den Unteransprüchen angegeben.

Die vorliegende Erfindung beschreibt demgemäß ein Verfahren zur Erkennung und Bewertung von Defekten einer Probenoberfläche, bei welchem die zu untersuchende Probenoberfläche nacheinander mit zwei Lichtarten beleuchtet und Bilder der Ober-, fläche anhand der zurückgeworfenen Strahlung mit einer Bildverarbeitungseinrichtung aufgenommen und analysiert werden.

Ein wesentlicher Gedanke der Erfindung besteht somit darin, die bei der Auswertung des ersten Beleuchtungsschritts mit kollimiertem Licht erhaltenen Resultate dafür zu verwenden, den zweiten Beleuchtungsschritt mit diffusem Licht unter besseren Beleuchtungsbedingungen durchzuführen.

Im einzelnen wird die zu untersuchende Oberfläche zunächst mit kollimiertem Licht bestrahlt und die von ihr zurückgeworfene Strahlung einer ortsauflösenden Bildverarbeitungseinrichtung zugeführt. Dann wird auf der Grundlage des von der Bildverarbeitungseinrichtung gelieferten Bildes eine Maske erstellt, in der die maskierten Bereiche durch relativ helle Bereiche des Bildes und die unmaskierten Bereiche durch relativ dunkle Bereiche des Bildes definiert sind. Dann wird die zu untersuchende Oberfläche mit diffusem Licht bestrahlt und die zurückgeworfene Strahlung der Bildverarbeitungseinrichtung zugeführt, wobei für die Einstellung der Beleuchtungsbedingungen nur die Strahlung von den unmaskierten Bereichen berücksichtigt wird.

Diese Verfahrensführung bewirkt, daß in dem zweiten Verfahrensschritt optimale Beleuchtungsbedingungen eingestellt werden können, da während der Einstellung der Beleuchtungsbedingungen infolge der Wirkung der Maske nur der Anteil des rückgestreuten diffusen Lichts berücksichtigt wird, der von den Defekten herrührt. Somit bleibt der Anteil des rückgestreuten Lichts, der von defektfreien Bereichen der Probenoberfläche herrührt, unberücksichtigt und die Defekte, auf deren Untersuchung es in erster Linie ankommt, werden optimal ausgeleuchtet.

Der erste Beleuchtungsschritt mit kollimiertem, vorzugsweise parallelisiertem (direktem) Licht dient somit zunächst dazu, alle Abweichungen von einer planen Oberfläche, also auch alle Schäden im Lack, sichtbar zu machen, unabhängig davon, ob die davon betroffenen Schichten transparent sind, oder ob diese Schichten opak oder völlig undurchsichtig sind. Diese Abweichungen, welcher Art sie auch immer sind, erscheinen bei der Aufnahme eines Bildes mit kollimiertem Licht als dunkle Bereiche, da an den Abweichungen das Licht nicht mehr wie in den defektfreien Bereiche in Richtung auf die Bildverarbeitungseinrichtung zurück reflektiert wird. Die defektfreien Bereiche erscheinen wiederum als helle Bereiche, da an ihnen das direkte Licht in Richtung auf die Bildverarbeitungseinrichtung zurück reflektiert wird.

Mit kollimiertem Licht werden zunächst optimale Beleuchtungsbedingungen eingestellt. Dann wird mit der Bildverarbeitungseinrichtung ein Bild erstellt. Anschließend wird eine Maske generiert, bei der die maskierten Bereiche durch die hellen, defektfreien Bereiche des Bildes und die unmaskierten Bereiche durch die dunklen Defektbereiche des Bildes gebildet werden. Diese Maske wird bei dem anschließenden Beleuchtungsschritt mit diffusem Licht dafür verwendet, optimale Beleuchtungsbedingungen einzustellen. Bei dieser Einstellung werden die hellen defektfreien Bereiche in vorteilhafter Weise außer Acht gelassen, die andernfalls zu einer unerwünschten Überlagerung der Defektbereiche führen würden. Die Defektbereiche würden nicht mehr optimale ausgeleuchtet werden.

In einer bevorzugten Ausführungsart werden in den jeweiligen Beleuchtungsschritten von den aufgenommenen Bildern Graustufenhistogramme erstellt. Diese eignen sich insbesondere dazu, optimale Beleuchtungsbedingungen einzustellen. Diese sind nämlich dann gegeben, wenn die in dem aufgenommenen Bild vorhandenen Grauwerte eine möglichst breite Häufigkeitsverteilung aufweisen. Ein geeignetes Maß für die Breite der Häufigkeitsverteilung ist die Standardabweichung. Die zwei Beleuchtungsschritte können also beispielsweise derart automatisiert durchgeführt werden, daß die Beleuchtungsbedingungen, insbesondere die Lichtstärke oder -intensität des kollimierten bzw. diffusen Lichts, schrittweise über einen vorgegebenen Bereich variiert wird und zu jeder Einstellung ein Graustufenhistogramm aufgenommen wird, seine Häufigkeitsverteilung bestimmt und die zugehörige Standardabweichung berechnet wird. Anschließend wird die Lichtstärke eingestellt, mit der die höchste Standardabweichung erreicht worden war, und bei dieser Lichtstärke wird ein Bild aufgenommen und anschließend ausgewertet.

Die Maske wird vorzugsweise derart erstellt, daß die unmaskierten Bereiche in Form einer Liste der bei der Einstellung der Beleuchtungsbedingungen im zweiten Beleuchtungsschritt zu berücksichtigenden Bildpunkte der Bildverarbeitungseinrichtung erstellt wird. Die Maske liegt somit lediglich in virtueller Form als elektronisch gespeicherte Maske vor. Bei der Erstellung der Maske können die Grauwerte des im ersten Beleuchtungsschritt aufgenommenen Bildes dienen. Bezüglich der Definition von relativ dunklen und relativ hellen Bereichen kann ein Schwellwert in der Grauwertskala vorgegeben werden. Solche Bereiche des Bildes, deren Grauwerte unterhalb dieses Schwellwertes liegen, sind helle Bereiche und werden somit als maskierte Bereiche definiert, während solche Bereiche des Bildes, deren Grauwerte oberhalb dieses Schwellwertes liegen, dunkle Bereiche sind und als unmaskierte Bereiche definiert werden.

Nachdem durch das erfindungsgemäße Verfahren optimale Beleuchtungsbedingungen für den zweiten Beleuchtungsschritt hergestellt wurden, wird bei dem hierfür festgestellten Lichtstärkewert eine Aufnahme getätigt. Vorzugsweise werden nicht nur bei der Einstellung der optimalen Beleuchtungsbedingungen, sondern auch bei der Aufnahme des auszuwertenden Bildes die Maske verwendet, um die als defektfrei definierten Gebiete auszublenden. Beispielsweise wird gemäß der elektronischen Liste der nicht zu berücksichtigenden Bildpunkte der Ausgang aller dieser Bildpunkte auf den Wert Null gesetzt, so daß die entsprechenden Bereiche auf dem aufgenommenen Bild als schwarze Bereiche erscheinen.

Im folgenden wird das erfindungsgemäße Verfahren anhand einer mit Defekten versehenen Lackprobe näher erläutert. Es zeigen:
- Fig.1: ein mit kollimiertem Licht aufgenommenes Bild einer zu untersuchenden, mit Defekten versehenen Probenoberfläche;
- Fig.2: einer aus dem Bild der Fig.1 erzeugten Maske;
- Fig.3A,B: ein mit diffusem Licht aufgenommenes Bild der maskierten Probenoberfläche der Fig.1 (A) und ein vergrößerter Ausschnitt eines Defektbereichs zur Sichtbarmachung einzelner darin vorhandener Grauwertbereiche (B);
- Fig.4A,B: geglättete Grauwerthistogramme des Bildes gemäß Fig.3A (B) und eines entsprechenden ohne Verwendung der Maske aufgenommenen Bildes (A).

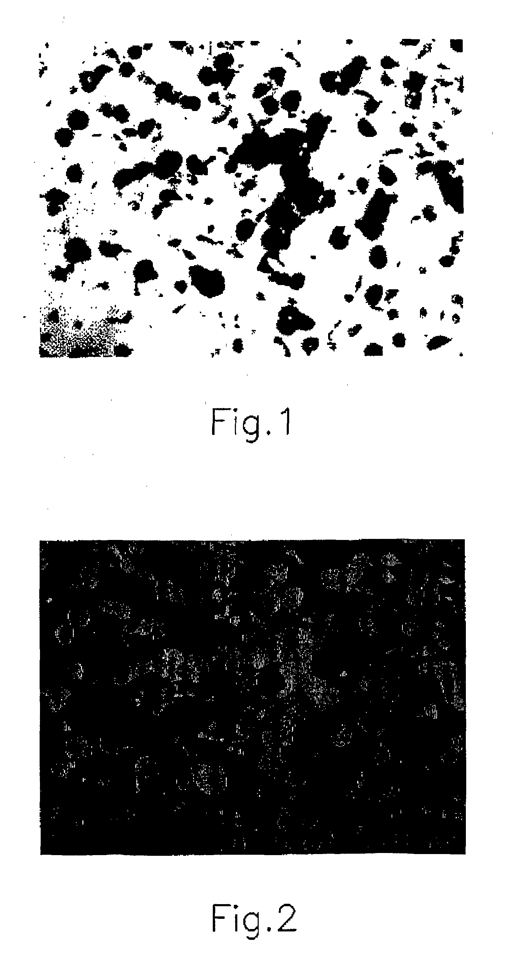

Die im folgenden beschriebenen Bilder wurden mit einem an sich im Stand der Technik bekannten Bilderkennungssystem aufgenommen, mit dem eine zu untersuchende Probe sowohl mit kollimiertem Licht als auch mit diffusem Licht beleuchtet werden kann. Bezüglich des Aufbaus einer solchen Einrichtung wird auf die eingangs bereits erwähnte Druckschrift WO 98/16815, insbesondere die Fig.1 und die zugehörige Beschreibung bezug genommen.

In der Fig.1 ist eine Bildaufnahme einer durch Schrotbeschuß geschädigten Lackprobe dargestellt, die mit kollimiertem Licht erstellt wurde. Wie zu sehen ist, werden bei dieser Lichtart im wesentlichen die Lackschäden schwarz und der unbeschädigte Lack weiß dargestellt.

Die Bilder werden mit einer elektronischen Videokamera mit einem CCD-Chip als ortsauflösendem Detektor aufgenommen. Die Lackoberfläche wird auf den CCD-Chip abgebildet. Die einzelnen Bildpunkte können Grauwerte auf einer Skala zwischen 0 und 255 einnehmen. Die Lichtstärke wird in vorgegebenen Stufen variiert und bei jeder eingestellten Lichtstärke wird eine Häufigkeitsverteilung der Grauwerte des aufgenommenen Bildes und daraus die Standardabweichung ermittelt. Anschließend wird die Lichtstärke mit der höchsten Standardabweichung ausgewählt und das hierbei aufgenommene Bild für die weitere Auswertung verwendet. Dieses Bild ist in Fig. 1 dargestellt.

Von dem Bild der Fig.1 wird nun eine Maske erstellt, d.h. es werden Bereiche definiert, die bei der weiteren Bildverarbeitung, insbesondere bei der Einstellung der optimalen Beleuchtungsbedingungen bei der Erstellung einer Aufnahme mit diffusem Licht, berücksichtigt werden und solche, die nicht mehr betrachtet werden. In der Fig.2 sind die maskierten Bereiche schwarz dargestellt und die unmaskierten Bereiche grau.

Die schwarzen maskierten Bereiche liegen in Form einer elektronischen Liste von Bildpunkten des CCD-Detektors vor, deren Grauwert unterhalb eines bestimmten vorgegebenen Schwellwerts liegt, die also auf diesem Weg als defektfreie Bereiche definiert werden. Bei der Erstellung der Maske werden somit die Grauwerte des aufgenommenen Bildes in zwei Bereiche, nämlich in unmaskierte Defektbereiche und defektfreie maskierte Bereiche eingeteilt.

Dann wird ein Bild der Lackoberfläche mit diffusem Licht aufgenommen. Wie bei der Aufnahme mit kollimiertem Licht wird auch hier die Lichtstärke des diffusen Lichts in vorgegebenen Stufen variiert und bei jeder eingestellten Lichtstärke wird eine Häufigkeitsverteilung der Grauwerte des aufgenommenen Bildes und daraus die Standardabweichung ermittelt. Dabei werden jedoch nur die Grauwerte der Bildpunkte berücksichtigt, die den unmaskierten Bereichen der im vorherigen Schritt erstellten Maske entsprechen. Lediglich von diesen Grauwerten wird die Häufigkeitsverteilung und die Standardabweichung bestimmt. Nachdem ein vorgegebener Lichtstärkebereich auf diese Weise durchschritten wurde, wird anschließend die Lichtstärke mit der höchsten Standardabweichung der Häufigkeitsverteilung ausgewählt und das hierbei aufgenommene Bild ausgewertet. Bei der Aufnahme des Bildes können die Grauwerte der den maskierten Bereichen entsprechenden Bildpunkte auf Null gesetzt werden, so daß sie wie schon bei der Darstellung der Maske in Fig.2 als schwarze Bereiche erscheinen

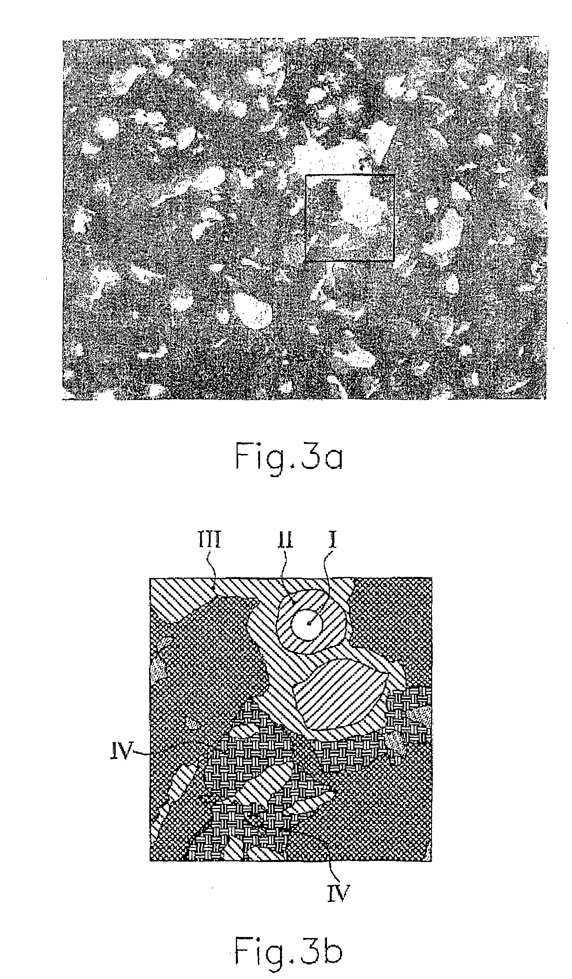

Fig. 3A zeigt die Schwarz-Weiß-Kopie einer Falschfarbendarstellung, die von dem aufgenommenen Bild erstellt wurde, wobei bestimmten vorherrschenden Grauwerten des Bildes verschiedene Farben zugeordnet wurden. In dem vergrößerten quadratischen Ausschnitt der Fig.3B ist ein Bereich etwa aus der Mitte des Bildes gezeigt. Dieser Ausschnitt verdeutlicht, daß in den aufgenommenen Defekten vier verschiedene Typen I-IV von Bereichen identifiziert werden können.

In der oberen Hälfte des Bildes ist ein kreisförmiger Bereich vom Bereichstyp I dargestellt. In diesem Bereich ist durch den Schrotbeschuß das Metall der Karosserie freigelegt. Die diesen Bereich umgebenden Bereiche vom Typ II und III sind mit Schraffuren gekennzeichnet.

Ein kreisförmiger Bereich vom Typ II umgibt den kreisförmigen metallischen Bereich, woraus sich schließen läßt, daß in diesem Abschnitt das Material der nächsthöheren Schicht freigelegt ist. Bereiche dieses Typs werden demzufolge von der ersten auf dem Metall aufgebrachten Schicht, der KTL-Schicht gebildet. Dieser Bereich ist wiederum von einem Bereich des Typs III umgeben, wodurch nahegelegt wird, daß es hierbei um die im Schichtaufbau nächstfolgende Schicht, die Fillerschicht handelt, die in den Bereichen vom Typ III freigelegt ist. Im unteren Teil des Bildes sind dunkler dargestellte Bereiche vom Typ IV dargestellt, die zumeist Bereiche vom Typ III umschließen. Daraus läßt sich schließen, daß an diesen Stellen die Farblackschicht freigelegt ist.

In der Klarlackschicht vorhandene Schäden wie Kratzer oder dergleichen können in der Aufnahme mit diffusem Licht nicht festgestellt werden, sondern nur in der Aufnahme mit kollimiertem Licht. Sie lassen sich also leicht dadurch identifizieren, daß in der Aufnahme mit diffusem Licht, in der ja nur die Defektgebiete dargestellt werden, bestimmte Bereiche schwarz erscheinen.

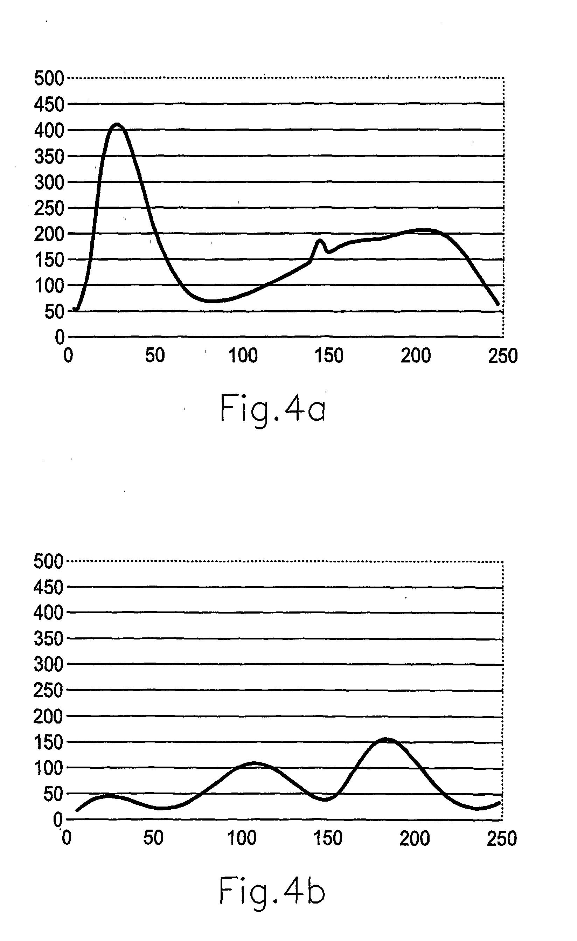

Fig.4A,B zeigt geglättete Graustufenhistogramme, wobei zunächst in Fig.4A ein ohne Verwendung einer Maske hergestelltes Graustufenhistogramm einer mit diffusem Licht erstellten Aufnahme der Lackprobe dargestellt ist. Man sieht deutlich den starken Einfluß defektfreier, heller Bereiche mit niedrigen Grauwerten, die in der linken Hälfte ein breites Maximum bilden. In der Fig.4B ist dagegen ein Graustufenhistogramm dargestellt, welches an derselben Probe mit Verwendung der Maske hergestellt wurde. Ohne die Maskierung wird also die entscheidende Information in den Defektbereichen überdeckt und eine Optimierung der Kontraste in diesen Bereich ist nicht möglich.

In der für die Erzeugung des diffusen Lichts verwendeten sphärischen Anordnung, auch "Ulbricht-Kugel" genannt, können als Lichtquellen auch LED's verwendet werden, beispielsweise rote, grüne und blaue LED's, mit denen das gesamte Farbspektrum abgedeckt werden kann und somit je nach den Anforderungen und der Farbe der Farblackschicht der zu untersuchenden Lackprobe diffuses Licht einer bestimmten Farbe auf die Probenoberfläche gerichtet werden.

## Patentansprüche

1. Verfahren zur Erkennung und Bewertung von Defekten einer Probenoberfläche, bei welchem
a.) die zu untersuchende Oberfläche mit kollimiertem Licht bestrahlt und die von ihr zurückgeworfene Strahlung einer ortsauflösenden Bildverarbeitungseinrichtung zugeführt wird,
b.) auf der Grundlage des von der Bildverarbeitungseinrichtung gelieferten Bildes eine Maske erstellt wird, in der maskierte Bereiche durch relativ helle Bereiche des Bildes und unmaskierte Bereiche durch relativ dunkle Bereiche des Bildes definiert sind, wobei ein Schwellwert in der Grauwertskala vorgegeben ist und Bereiche des Bildes, deren Grauwerte unterhalb dieses Schwellwertes liegen, relativ helle Bereiche sind, und Bereiche des Bildes, deren Grauwerte oberhalb dieses Schwellwertes liegen, relativ dunkle Bereich sind,
c.) die zu detektierende Oberfläche mit diffusem Licht bestrahlt und die zurückgeworfene Strahlung der Bildverarbeitungseinrichtung zugeführt wird, wobei für die Einstellung der Beleuchtungsbedingungen nur die Strahlung von den unmaskierten Bereichen berücksichtigt wird.

2. Verfahren nach Anspruch 1,
**dadurch gekennzeichnet, daß**
- in den Verfahrensschritten a.) und c.) die in der Bildverarbeitungseinrichtung erhaltenen Bildsignale digitalisiert und mittels eines Rechners Graustufenhistogramme der Bilder erstellt werden.

3. Verfahren nach Anspruch 2,
**dadurch gekennzeichnet, daß**
- die Beleuchtungsbedingungen so eingestellt werden, daß ein die Verteilung der Graustufenwerte im Graustufenhistogramm repräsentierender Parameter, insbesondere die Standardabweichung, maximal wird, und
- das bei diesen Beleuchtungsbedingungen entstandene Bild ausgewählt wird.

4. Verfahren nach Anspruch 2 oder 3,
**dadurch gekennzeichnet, daß**
- im Verfahrensschritt b.) die relativ dunklen bzw. relativ hellen Bereiche dadurch definiert sind, daß ihr Grauwert oberhalb bzw. unterhalb eines vorgegebenen Schwellwertes liegt.

5. Verfahren nach einem der Ansprüche 2 bis 4,
**dadurch gekennzeichnet, daß**
- die Maske derart erstellt wird, daß die unmaskierten Bereiche in Form einer Liste der bei der Auswertung zu berücksichtigenden Bildpunkte der Bildverarbeitungseinrichtung erstellt wird.

## Claims

1. Method for detecting and evaluating defects in a sample surface, in the case of which
a.) the surface to be examined is irradiated with collimated light, and the radiation retroreflected by it is fed to a spatially resolving image processing device,
b.) there is produced on the basis of the image supplied by the image processing device a mask in which masked areas are defined by relatively bright areas of the image, and unmasked areas are defined by relatively dark areas of the image, a threshold value being prescribed in the grey-value scale, and areas of the image whose grey values are below this threshold value are relatively bright areas, and areas of the image whose grey values are above this threshold value are relatively dark areas, and
c.) the surface to be detected is irradiated with diffuse light, and the retroreflected radiation is fed to the image processing device, only the radiation from the unmasked areas being taken into account for setting the illumination conditions.

2. Method according to Claim 1, **characterized in that** the image signals obtained in the image processing device are digitized in method steps a.) and c.), and grey-scale histograms of images are produced by means of a computer.

3. Method according to Claim 2, **characterized in that** the illumination conditions are set so as to maximize a parameter, in particular the standard deviation, representing the distribution of the grey-scale values in the grey-scale histogram, and the image resulting under these illumination conditions is selected.

4. Method according to Claim 2 or 3, **characterized in that** the relatively dark and relatively bright areas are defined in method step b.) by virtue of the fact that their grey value is above, or respectively, below a prescribed threshold value.

5. Method according to one of Claims 2 to 4, **characterized in that** the mask is produced in such a way that the unmasked areas are produced in the form of a list of the pixels of the image processing device which are to be taken into account in the evaluation.

## Revendications

1. Procédé pour reconnaître et évaluer des défauts de la surface d'un échantillon, dans lequel :
a) la surface à analyser est illuminée avec de la lumière collimatée et le rayonnement renvoyé par cette surface est amené à un système de traitement d'image à résolution locale,
b) en se basant sur l'image fournie par le système de traitement d'image, un masque est produit dans lequel les zones masquées sont définies par des zones relativement claires de l'image et les zones non masquées sont définies par des zones relativement sombres de l'image, une valeur seuil étant définie dans l'échelle de valeurs de gris, et les zones de l'image dont les valeurs de gris sont inférieures à cette valeur seuil sont des zones relativement claires, et des zones de l'image dont les valeurs de gris sont supérieures à cette valeur seuil sont des zones relativement sombres,
c) la surface à détecter est illuminée avec de la lumière diffuse et le rayonnement renvoyé est amené au système de traitement d'image, dans lequel on prend en compte uniquement le rayonnement des zones non masquées pour régler les conditions d'éclairage.

2. Procédé selon la revendication 1, **caractérisé en ce que** dans les étapes a) et c) du procédé, les signaux d'image obtenus dans le système de traitement d'image sont numérisés, et des histogrammes des valeurs de gris des images sont établis au moyen d'un calculateur.

3. Procédé selon la revendication 2, **caractérisé en ce que**
- on règle les conditions d'éclairage de telle sorte qu'un paramètre représentant la répartition des valeurs de gris dans l'histogramme des valeurs de gris, en particulier l'écart standard, devient maximal, et
- on choisit l'image formée dans ces conditions d'éclairage.

4. Procédé selon l'une ou l'autre des revendications 2 et 3, **caractérisé en ce que** dans l'étape b) du procédé les zones relativement sombres ou relativement claires sont définies du fait que leur valeur de gris est supérieure ou inférieure à une valeur seuil prédéfinie.

5. Procédé selon l'une des revendications 2 à 4, **caractérisé en ce que** le masque est établi de telle sorte que les zones non masquées sont établies sous la forme d'une liste des points d'image, à prendre en compte lors de l'évaluation, du système de traitement d'image.
